# EUROPÄISCHE PATENTANMELDUNG

(11) **EP 1 166 945 A1**
(43) Veröffentlichungstag der Anmeldung: **02.01.2002**
(21) Anmeldenummer: 00113522.7
(22) Anmeldetag: 26.06.2000
(51) Int. Cl.: B23K 11/31

(54) **Elektrodenhalterung für eine Brückenschweissmaschine**

(71) Anmelder: Emil Jäger GmbH & Co. KG, D-48153 Münster (DE)
(72) Erfinder: Perner, Peter, 48301 Nottuln (DE)
(74) Vertreter: Habbel, Ludwig (Lutz), Dipl.-Ing.

(57) **Zusammenfassung**

Bei einer Elektrodenhalterung für eine Brückenschweißmaschine, mit einem auf- und abbeweglichen Druckzylinder (2) sowie mit einer Elektrodenbrücke (4), wobei die Elektrodenbrücke über einen Zwischenkopf kippbeweglich oder schwenkbeweglich an den Druckzylinder anschließt, schlägt die Erfindung vor, daß zwischen zwei kippbeweglich bzw. schwenkbeweglich gegeneinander bewegbaren Bauteilen eine Raste (9) ausgebildet ist, mit einer Vertiefung (10) und einem federelastisch ausgestalteten oder federelastisch gelagerten Rastkörper (11), der bei einer Bewegung des einen Bauteiles gegen die Federwirkung aus der in dem anderen Bauteil vorgesehenen Vertiefung bewegbar ist, wobei an die Vertiefung angrenzend Führungsflächen (15) für den Rastkörper vorgesehen sind, welche mit zunehmender Entfernung von der Vertiefung eine zunehmende Spannung der Feder bewirken.

## Beschreibung

Die Erfindung betrifft eine Elektrodenhalterung nach dem Oberbegriff des Anspruches 1.

Bei Brückenschweißmaschinenwerden die Elektrodenbrücken abgesenkt bzw. angehoben, wie z.B. aus der DE-OS 21 07 665 bekannt. An den beiden Enden einer Elektrodenbrücke sind üblicherweise die eigentlichen Schweißkontakte als austauschbare Verschleißteile, beispielsweise in Form von sogenannten Elektrodenwürfeln, angeordnet. Die Elektrodenbrücken können mittels eines Druckzylinders abgesenkt bzw. angehoben werden.

Beim Verschweißen von Längs- und Querdrähten kann durch unterschiedliche Drahtdurchmesser erforderlich werden, die beiden Elektrodenwürfel unterschiedlich tief abzusenken, damit die Schweißstelle sicher kontaktiert wird. Auch bei der Verwendung gleicher Drahtdurchmessern an beiden Schweißstellen kann sich die gleiche Notwendigkeit ergeben, wenn an der einen Schweißstelle die beiden aufeinanderliegenden Schweißdrähte, die jeweils an ihrer Oberfläche profiliert sind, mit ihren Profilerhebungen aufeinander liegen, während an der anderen Schweißstelle die beiden Drähte jeweils mit ihren "Profiltälern" aufeinanderliegen.

Um eine gleichmäßige Beaufschlagung der beiden Schweißstellen zu ermöglichen, sind die gattungsgemäßen Elektrodenhalterungen daher mit einer kippbeweglichen oder schwenkbeweglichen Lagerung der Elektrodenbrücken versehen. Im Folgenden wird vereinfachend stets nur von einer Kippbewegung gesprochen. In einer Normalstellung, die auch als Ausgangsstellung oder Mittelstellung bezeichnet werden kann, sind beide Elektrodenwürfel gleich hoch angeordnet, so daß die Elektrodenbrücke horizontal ausgerichtet ist. Durch die Kippbewegung wird ein Elektrodenwürfel angehoben und gleichzeitig der andere Elektrodenwürfel abgesenkt. Einzelne, nicht zu einer Brücke zusammengefaßte und ebenfalls beweglich gelagerte Schweißelektroden sind aus der US 5,285,043 bekannt.

Aus der Kippstellung müssen die Elektrodenbrücken stets vor jedem neuen Schweißvorgang in ihre Normalstellung zurückgeführt werden, denn eine schrägstehende Elektrodenbrücke kann dazu führen, daß beim Einführen der zu verschweißenden Drähte in den zwischen Ober- und Unterelektrode gebildeten Schweißspalt die Drähte in ihrer Bewegung gegen die Schweißelektroden, also beispielsweise gegen die Elektrodenwürfel geraten und deren vorzeitigen Verschleiß bewirken, so daß ein unerwünscht hoher Wartungsaufwand die Folge ist.

Problematisch ist dabei die Rückstellung der Elektrodenbrücke aus ihrer gekippten Stellung in die Normalstellung: Federungselemente, die beidseitig von außen an der Elektrodenhalterung anliegen, können aufgrund von Fertigungs- bzw. Materialtoleranzen unterschiedliche Rückstellkräfte zu einer der beiden Richtungen aufweisen, so daß das sichere Einnehmen der Ausgangsstellung nicht gewährleistet ist. Zudem können diese außenliegenden Federungselemente ggf. durch Schweißspritzer oder mechanische Einflüsse, wie Stöße od. dgl., beeinträchtigt werden, so daß auch hierdurch unterschiedliche Rückstellkräfte resultieren können.

Der Erfindung liegt die Aufgabe zugrunde, eine gattungsgemäße Elektrodenhalterung dahingehend zu verbessern, daß diese eine zuverlässige Rückstellung der Elektrodenbrücke in ihre Ausgangsstellung ermöglicht und daß sie gegen Störeinflüsse möglichst unempfindlich ist.

Diese Aufgabe wird durch eine Elektrodenhalterung mit den Merkmalen des Anspruches 1 gelöst.

Die Erfindung schlägt mit anderen Worten vor, ein Rastgesperre zu verwenden, wie es für sich genonmmen an sich bekannt ist, z. B. aus "RICHTER, O.; v. Voss, R.: Bauelemente der Feinmechanik, Berlin, Verlag Technik, 5. Auflage, 1952, S. 298 - 309".

Es soll also eine Raste mit einem federnden Rastkörper verwendet werden, wobei jede Auslenkung der beiden beweglich gegeneinander gelagerten Bauteile den Rastkörper aus einer Vertiefung führt. Dabei wird der Rastkörper gegen Führungsflächen gedrückt, die einen zunehmend stärkeren Federdruck bewirken. Die Kippbewegung der Elektrodenbrücke, wenn sich diese an unterschiedlich hohe Schweißdrähte anpaßt, bewirkt eine derartige Auslenkung des Rastkörpers. Bei anschließender Entlastung der Elektrodenbrücke wird der Rastkörper aufgrund der Federdwirkung entlang einer Führungsfläche zurückgeführt, bis er in seiner Vertiefung angeordnet ist, da in dieser Stellung die Feder so weit wie möglich entspannt ist. Auf diese Weise kann zuverlässig sichergestellt werden, daß die Elektrodenbrücke nach dem Schweißvorgang in ihrer Ausgangsstellung zurückgeführt wird. Dadurch, daß eine derartige Raste innerhalb der Bauteile, die gegeneinander kippbeweglich sind, angeordnet werden kann, ist diese Raste optimal gegen von außen einwirkende mechanische Beeinträchtigungen geschützt sowie gegen Schweißspritzer.

Die für den Rastkörper wirksame Federkraft kann entweder durch eine federelastische Ausgestaltung des Rastkörpers selbst bewirkt werden oder durch ein eigenes, als Feder ausgestaltetes Bauteil. Vorteilhaft kann dabei vorgesehen sein, den Rastkörper als eine Kugel auszugestalten, die durch eine wendelförmige Druckfeder beaufschlagt und gegen die Vertiefung bzw. gegen die Führungsflächen gedrückt wird. Auf diese Weise läßt sich einerseits eine Raste mit kleinen baulichen Abmessungen verwirklichen, die problemlos innerhalb der Elektrodenanordnung geschützt untergebracht werden kann und andererseits bewirkt die Ausgestaltung des Rastkörpers als Kugel eine leichtlaufende Beweglichkeit der Raste.

Je nach den baulichen Gegebenheiten der Elektrodenanordnung kann vorteilhaft vorgesehen sein, zwei oder mehr Rasten anzuordnen. Auf diese Weise können jeweils vergleichsweise kleine Rasten verwirklicht werden, die für sich genommen möglicherweise nicht die erforderliche Rückstellkraft aufbringen, die aber problemlos innerhalb der vorgegebenen Geometrie der Elektrodenanordnung in den verwendeten Bauteilen unterzubringen sind. Das Zusammenwirken dieser mehreren, kleineren Rasten stellt insgesamt eine ausreichend starke Rückstellkraft sicher.

Im Vergleich zu von außen einwirkenden Federelementen, die auf die Elektrodenbrücke in unterschiedlichen Richtungen einwirken, sind unterschiedliche Rückstellkräfte, erzeugt durch unterschiedlich starke Federn oder unterschiedlich steil verlaufende Führungsflächen bei mehreren in der Elektrodenanordnung vorgesehenen Rasten völlig unkritisch, da sich stets lediglich die einzelnen, ggf. unterschiedlichen, Federkräfte zu der insgesamt wirkenden Rückstellkraft addieren.

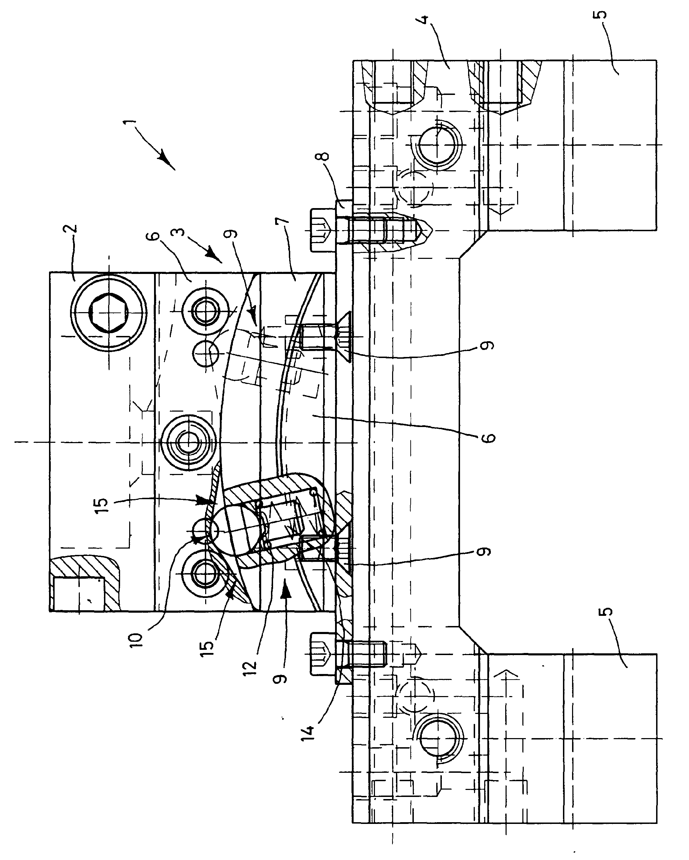

Ein Ausführungsbeispiel der Erfindung wird anhand der Zeichnung im folgenden näher erläutert.

Dabei ist mit 1 allgemein eine Elektrodenanordnung bezeichnet, bei der rein schematisch ein auf- und abbeweglicher Druckzylinder 2 angedeutet ist, an dem mittels eines Gabelkopfes 3 eine Elektrodenbrücke 4 befestigt ist. Die Elektrodenbrücke 4 weist zwei auswechselbare, als Verschleißteile vorgesehene Elektrodenwürfel 5 auf, die jeweils einer Schweißstelle anliegen, wenn der Druckzylinder 2 die Elektrodenbrücke 4 auf die Schweißebene abgesenkt hat.

Der Gabelkopf 3 besteht aus einem metallischen Klemmkopf 6 sowie aus einer gebogenen Schiene 7, die der Klemmkopf 6 umgreift, wobei die Schiene 7 einen T-förmigen Querschnitt aufweist und aus einem gleitfreudigen Kunststoff besteht. Die Elektrodenbrücke 4 ist an eine Halteplatte 8 geschraubt, die ihrerseits über Halteschrauben 9 mit dem unteren, schmaleren Abschnitt der T-förmigen Schiene 7 verbunden ist. Dieser schmalere Abschnitt der T-förmigen Schiene 7 wird durch den Klemmkopf 6 seitlich geführt und von unten unterstützt: auf dem unteren Bereich des Klemmkopfes 6 läuft der obere, breitere Bereich der T-förmigen Schiene 7.

Der gebogene Verlauf der Führung von Klemmkopf 6 und Schiene 7 bewirkt eine Kippbeweglichkeit bzw. Schwenkbeweglichkeit der Schiene 7 innerhalb des Klemmkopfes 6 und damit eine dementsprechende Beweglichkeit der Elektrodenbrücke 4 gegenüber dem Druckzylinder 2. Die Biegung der Schiene 7 ist dabei so gewählt, daß die Elektrodenbrücke 4 um einen Drehpunkt beweglich ist, welcher genau in der Schweißebene, also auf Höhe der Unterkanten der beiden Elektrodenwürfel 5 liegt.

Das Einhalten der in der Zeichnung dargestellten Ausgangsstellung der Elektrodenanordnung 1 wird durch zwei Rasten 9 sichergestellt, wobei die rechte Raste 9 lediglich gestrichelt angedeutet ist. Jede Raste 9 besteht aus einer im Klemmkopf 6 vorgesehenen Vertiefung 10 sowie aus einem als Kugel ausgebildeten Rastkörper 11, der durch eine als Druckfeder ausgestaltete Wendelfeder 12 in die Vertiefung 10 gedrückt wird. Die Wendelfeder 12 liegt dabei dem Kragen eines Zentrierstiftes 14 an, wobei dieser Kragen einen Sitz für den Rastkörper 11 bildet.

Bei einer Kippbewegung der Elektrodenbrücke 4 wird die Kugel, also der Rastkörper 11, aus der Vertiefung 10 bewegt, Er wandert mit fortschreitender Kippbewegung der Elektrodenbrücke 4 entlang einer von zwei Führungsflächen 15, die sich beidseitig an die Vertiefung 10 anschließen. Durch den Verlauf der Führungsflächen 15 wird in jeder Bewegungsrichtung, in der die Elektrodenbrücke 4 kippen kann, bei einer Abweichung von der in der Zeichnung dargestellten Ausgangsstellung bewirkt, daß der Rastkörper 11 zunehmend gegen die Wendelfeder 12 gedrückt wird, je weiter diese erwähnte Kippbewegung von der in der Zeichnung dargestellten Ausgangsstellung abweicht.

Die Kippbewegung erfolgt automatisch dadurch, daß beim Absenken des Druckzylinders 2 die beiden Elektrodenwürfel 5 nicht gleichzeitig auf den zu verschweißenden Drähten aufsetzen, was aus einem Höhenunterschied der beiden zu verschweißenden Drahtkreuzungspunkte resultiert. Nach der Verschweißung, also bei Entlastung der Elektrodenbrücke 4 durch das Anheben des Druckzylinders 2, bewirkt die Rückstellkraft der Wendelfeder 12, daß der Rastkörper 11 entlang der Führungsfläche 15 in die Vertiefung 10 zurückgeführt wird, wobei sich hier die Rückstellkräfte der Wendelfedern 12 aus beiden Rasten 9 addieren.

Da die Rastkörper 11 mitsamt den Zentrierstiften 14 und den Wendelfedern 12 innerhalb der T-förmigen Schiene 7 angeordnet sind und die Vertiefungen sowie die Führungsflächen 15 ausschließlich innerhalb des Klemmkopfes 6 angeordnet sind, wird insgesamt eine gegen äußere Einflüsse optimal geschützte Rückstellvorrichtung für die Elektrodenbrücke 4 geschaffen.

## Patentansprüche

1. Elektrodenhalterung für eine Brückenschweißmaschine, mit einer Elektrodenbrücke, welche mittels eines Druckzylinders auf und ab beweglich ist,
wobei die Elektrodenbrücke über einen Zwischenkopf kippbeweglich oder schwenkbeweglich an den Druckzylinder anschließt,
**dadurch gekennzeichnet,**
**daß** zwischen zwei kippbeweglich bzw. schwenkbeweglich gegeneinander bewegbaren Bauteilen eine Raste (9) ausgebildet ist,
mit einer Vertiefung (10) und einem federelastisch ausgestalteten oder federelastisch gelagerten Rastkörper (11), der bei einer Bewegung des einen Bauteiles gegen die Federwirkung aus der in dem anderen Bauteil vorgesehenen Vertiefung (10) bewegbar ist,
wobei an die Vertiefung (10) angrenzend Führungsflächen (15) für den Rastkörper (11) vorgesehen sind, welche mit zunehmender Entfernung von der Vertiefung (10) eine zunehmende Spannung der Feder bewirken.

2. Elektrodenhalterung nach Anspruch 1, **dadurch gekennzeichnet, daß** der Rastkörper (11) als durch eine Wendelfeder (12) belastete Kugel ausgestaltet ist.

3. Elektrodenhalterung nach Anspruch 1 oder 2, **dadurch gekennzeichnet, daß** zwei oder mehr Rasten (9) vorgesehen sind.
